# EUROPÄISCHE PATENTANMELDUNG

(11) **EP 2 477 457 A2**
(43) Veröffentlichungstag der Anmeldung: **18.07.2012**
(21) Anmeldenummer: 11009502.3
(22) Anmeldetag: 01.12.2011
(51) Int. Cl.: H05B 33/08

(54) **Elektrisches Unterputz-Installationsgerät zur Helligkeitssteuerung einer Beleuchtungsanlagen**

(30) Priorität: 13.01.2011 DE 102011008508
(71) Anmelder: ABB AG, 68309 Mannheim (DE)
(72) Erfinder: Goldyn, Dirk, 58454 Witten (DE); Czimmeck, Frank, 58511 Lüdenscheid (DE); Clever, Gerhard, 58553 Halver (DE); Linde, Holger, 44137 Dortmund (DE)

(57) **Zusammenfassung**

Es wird ein elektrisches Unterputz-Installationsgerät (1) mit einer Steuerung zur Einstellung einer gewünschten Helligkeit einer Beleuchtungsanlage (18), mit einem einen Tragring (14) aufweisenden Unterputz-Geräteeinsatz (13), einem hierauf aufsteckbarem Bedienteil (16) sowie einem Abdeckrahmen (17) vorgeschlagen, wobei der Unterputz-Geräteeinsatz (13) einen Anschlussklemmenblock (2) zum Anschluss des Phasenleiters (L) eines Wechselspannungsnetzes (19) sowie eines der Beleuchtungsanlage (18) zugeführten Lastleiters (L') aufweist und die Beleuchtungsanlage (18) anderseits mit dem Nulleiter (N) des Wechselspannungsnetzes (19) verbunden ist und wobei das Bedienteil (16) ein Einstellelement (9) zur Vorgabe der gewünschten Helligkeit aufweist. Die Steuerung ist in Form eines Hochfrequenz-Pulsweitenmodulation-Generators ausgebildet, welcher über ein LC-Filter (3) an den Anschlussklemmenblock (2) angeschlossen ist und von einem Mikrocontroller (8) angesteuert wird, wobei das Einstellelement (9) den Mikrocontroller (8) beaufschlagt und damit das Puls-/Pausenverhältnis der Hochfrequenz-Taktung der Netzwechselspannung einstellt.

## Beschreibung

Die Erfindung betrifft ein elektrisches Unterputz-Installationsgerät mit einer Steuerung zur Einstellung einer gewünschten Helligkeit einer Beleuchtungsanlage, mit einem einen Tragring aufweisenden Unterputz-Geräteeinsatz, einem hierauf aufsteckbarem Bedienteil sowie einem Abdeckrahmen, wobei der Unterputz-Geräteeinsatz einen Anschlussklemmenblock zum Anschluss des Phasenleiters eines Wechselspannungsnetzes sowie eines der Beleuchtungsanlage zugeführten Lastleiters aufweist und die Beleuchtungsanlage anderseits mit dem Nulleiter des Wechselspannungsnetzes verbunden ist und wobei das Bedienteil ein Einstellelement zur Vorgabe der gewünschten Helligkeit aufweist.

Elektrische Unterputz-Installationsgeräte zur Helligkeitssteuerung einer Beleuchtungsanlage respektive Dimmer oder Steuergeräte sind allgemein bekannt, es wird hierzu beispielsweise auf den Busch-Jaeger Katalog 2009, BJE 0001-0-1117/09.08/0502-M, dpi 404103, Seiten 288 - 292 hingewiesen. Im bekannten Fall erfolgt die Helligkeitssteuerung einer Beleuchtungsanlage nach dem Phasenanschnitts- bzw. Phasenabschnittsprinzip, wie beispielsweise auch aus der EP 0 618 667 B1 bekannt. Nachteilig dabei ist die nicht sinusförmige Stromaufnahme aus dem Wechselspannungsnetz, wodurch sich beispielsweise Probleme hinsichtlich unerwünschter Stromoberwellen ergeben. Ferner ist die Qualität der Helligkeitssteuerung von der Netzfrequenz (Netzfrequenzschwankungen) und von der Netzfrequenz überlagerten Tonfrequenzen (Rundsteuersignale) abhängig. Des Weiteren entstehen im Leistungsteil des Unterputz-Installationsgeräts relativ hohe Verlustleistungen.

Der Erfindung liegt die Aufgabe zugrunde, ein optimiertes elektrisches Unterputz-Installationsgerät zur Helligkeitssteuerung einer Beleuchtungsanlage anzugeben.

Diese Aufgabe wird erfindungsgemäß gelöst durch ein elektrisches Unterputz-Installationsgerät mit einer Steuerung zur Einstellung einer gewünschten Helligkeit einer Beleuchtungsanlage, mit einem einen Tragring aufweisenden Unterputz-Geräteeinsatz, einem hierauf aufsteckbarem Bedienteil sowie einem Abdeckrahmen, wobei der Unterputz-Geräteeinsatz einen Anschlussklemmenblock zum Anschluss des Phasenleiters eines Wechselspannungsnetzes sowie eines der Beleuchtungsanlage zugeführten Lastleiters aufweist und die Beleuchtungsanlage anderseits mit dem Nulleiter des Wechselspannungsnetzes verbunden ist, wobei das Bedienteil ein Einstellelement zur Vorgabe der gewünschten Helligkeit aufweist und wobei die Steuerung in Form eines Hochfrequenz-Pulsweitenmodulation-Generators ausgebildet ist, welcher über ein LC-Filter an den Anschlussklemmenblock angeschlossen ist und von einem Mikrocontroller angesteuert wird, wobei das Einstellelement den Mikrocontroller beaufschlagt und damit das Puls-/Pausenverhältnis der Hochfrequenz-Taktung der Netzwechselspannung einstellt.

In Ausgestaltung der Erfindung kann der Hochfrequenz-Pulsweitenmodulation-Generator entweder in Form zweier antiseriell geschalteter Leistungshalbleiter, insbesondere Leistungstransistoren mit antiparallelen Dioden oder alternativ hierzu in Form einer Gleichrichterbrücke mit einem am Gleichstromausgang angeschlossenen Leistungstransistor ausgebildet sein.

Die mit der Erfindung erzielbaren Vorteile liegen insbesondere darin, dass das vorgeschlagene elektrische Unterputz-Installationsgerät zur Helligkeitssteuerung einer Beleuchtungsanlage universell für ohmsche (resistive), kapazitive und induktive Beleuchtungsanlagen geeignet ist. Mittels des HF-PWM-Generators des Unterputz-Installationsgeräts ist eine sinusförmige Ausgangsspannung mit variabler Amplitude einstellbar. Es ist eine flackerfreie Steuerung resistiver, kapazitiver und induktiver Beleuchtungsanlagen möglich. Es ist keine Synchronisation mit der Netzwechselspannung nötig. Ferner ist ein Betrieb sowohl am 50Hz-Wechselspannungsnetz als auch am 60Hz-Wechselspannungssnetz universell möglich. Das vorgeschlagene elektrische Unterputz-Installationsgerät mit einer Steuerung zur Einstellung einer gewünschten Helligkeit einer Beleuchtungsanlage ist unempfindlich gegen Rundsteuersignale und Netzfrequenzschwankungen.

Zweckmäßige Ausgestaltungen der Erfindung sind in weiteren Unteransprüchen gekennzeichnet.

Die Erfindung wird nachstehend an Hand der in der Zeichnung dargestellten Ausführungsbeispiele näher erläutert. Es zeigen:
- Fig. 1: eine Schaltskizze des elektrisches Unterputz-Installationsgeräts mit einer Steuerung zur Einstellung einer gewünschten Helligkeit einer Beleuchtungsanlage,
- Fig. 2: die prinzipielle Einbindung des elektrischen Unterputz-Installationsgeräts zum Wechselspannungsnetz und zur Beleuchtungsanlage,
- Fig. 3 - 5: interessierende zeitliche Spannungs- und Strom-Verläufe bei unterschiedlicher Ansteuerung des HF-PWM-Generators.

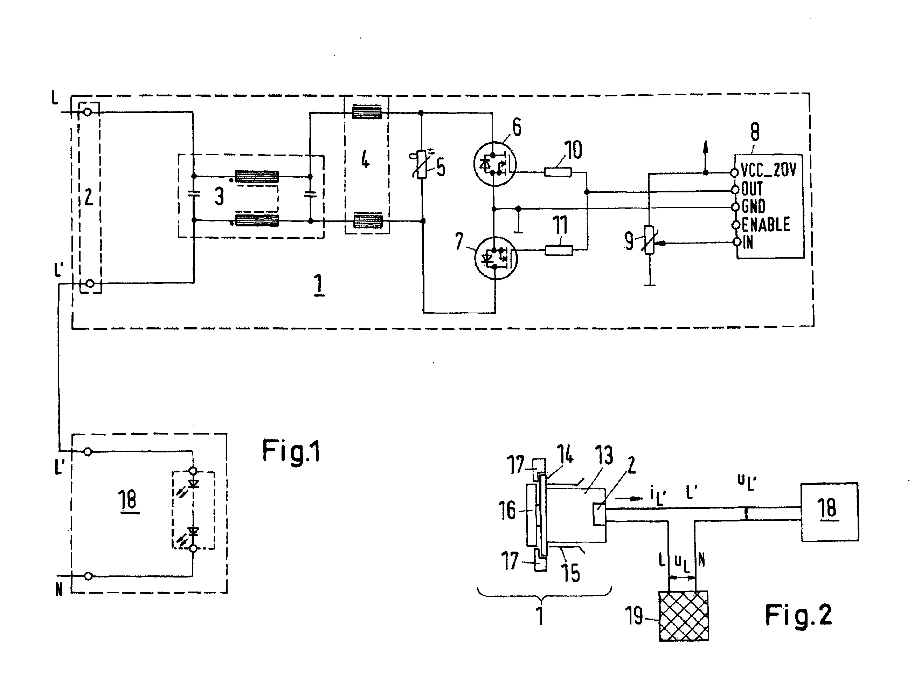

In Fig. 1 ist eine Schaltskizze des elektrischen Unterputz-Installationsgeräts mit einer Steuerung zur Einstellung einer gewünschten Helligkeit einer Beleuchtungsanlage dargestellt. Es ist ein elektrisches Unterputz-Installationsgerät 1 zur Helligkeitssteuerung einer Beleuchtungsanlage (Steuergerät, Dimmer) zu erkennen, welches einen Hochfrequenz-Pulsweitenmodulation-Generator oder auch HF-PWM-Generator aufweist, wobei das Unterputz-Installationsgerät 1 unter anderem die folgenden Baukomponenten umfasst:
- einen Anschlussklemmenblock 2 für den Anschluss eines Phasenleiters L eines Wechselspannungsnetzes sowie für den Anschluss eines Lastleiters L' (aufbereitete Phase),
- ein an den Anschlussklemmenblock 2 angeschlossenes LC-Filter 3,
- an das LC-Filter 3 angeschlossene gekoppelte Induktivitäten 4,
- ein Überspannungs-Schutzelement 5 zwischen den Klemmen der gekoppelten Induktivitäten 4,
- zwei an die Klemmen der gekoppelten Induktivitäten 4 angeschlossene, antiseriell geschaltete Leistungshalbleiter 6, 7, insbesondere Leistungstransistoren (Power-MOS-Transistoren) mit antiparallelen Dioden,
- einen Mikrocontroller 8, welcher über Beschaltungswiderstände 10, 11 mit den Steueranschlüssen der Leistungshalbleiter 6, 7 verbunden ist,
- ein Einstellelement 9, welches den Mikrocontroller 8 beaufschlagt und hierdurch die gewünschte Aussteuerung des HF-PWM-Generators vorgibt.

Eine Beleuchtungsanlage 18, vorzugsweise mit LEDs, ist einerseits mit dem Nulleiter N des Wechselspannungsnetzes und andererseits mit dem Lastleiter L' verbunden.

Alternativ zu den beiden antiseriell geschalteten Leistungshalbleitern 6, 7 kann auch eine Gleichrichterbrücke mit einem am Gleichstromausgang angeschlossenen Leistungshalbleiter respektive Leistungstransistor (Power-MOS-Transistor) verwendet werden.

In Fig. 2 ist die prinzipielle Einbindung des elektrischen Unterputz-Installationsgeräts zum Wechselspannungsnetz und zur Beleuchtungsanlage dargestellt. Das Unterputz-Installationsgerät 1 besteht aus einem Unterputz-Geräteeinsatz 13, einem auf diesen Unterputz-Geräteeinsatz 13 aufsteckbaren Bedienteil 16 mit Einstellelement 9 und einem Abdeckrahmen 17. Der Unterputz-Geräteeinsatz 13 weist einen Tragring 14 sowie Federspreizen 15 für die Montage in einer handelsüblichen Unterputz-Gerätedose (Durchmesser 60 mm) auf.

Der Unterputz-Geräteeinsatz 13 des Unterputz-Installationsgeräts 1 umfasst die vorstehend angeführten Baukomponenten: Anschlussklemmenblock 2 + LC-Filter 3 + gekoppelte Induktivitäten 4 + Überspannungs-Schutzelement 5 + Leistungshalbleiter 6, 7 (alternativ Gleichrichterbrücke + Leistungshalbleiter) + Mikrocontroller 8 + Beschaltungswiderstände 10, 11. Das Wechselspannungsnetz 19 (230V-Netz) ist über seinen Phasenleiter L mit dem Anschlussklemmenblock 2 des Unterputz-Geräteeinsatzes 13 und über seinen Nulleiter N mit der Beleuchtungsanlage 18 verbunden.

Die jeweils weiteren Klemmen des Anschlussklemmenblocks 2 und der Beleuchtungsanlage 18 sind über den Lastleiter L' miteinander verbunden. Der über den Lastleiter L' fließende Laststrom ist mit i_{L'}, die Netzwechselspannung zwischen Phasenleiter L und Nulleiter N ist mit u_{L} und die Ausgangswechselspannung zwischen Lastleiter L' und Nulleiter N ist mit u_{L'} bezeichnet.

Das Unterputz-Installationsgerät 1 kann vorteilhaft mit beliebigen Komponenten eines konventionellen Installationsgeräte-Programms für Steckdosen / Schalter / Taster kombiniert werden, desgleichen wird ein konventioneller Abdeckrahmen 17 dieses konventionellen Installationsgeräte-Programms eingesetzt. Unter konventionellen Installationsgeräte-Programmen werden dabei Programme verstanden, wie sie von zahlreichen Installationsgeräte-Herstellern vertrieben werden und verschiedene Wippschalter-Einsätze, Wipptaster-Einsätze, Steckdosen-Einsätze sowie Wippen und Abdeckrahmen 1fach, 2fach, 3fach, 4fach in bestimmten Designs und bestimmten Farben beinhalten.

Gleichermaßen ist eine vereinfachte Ausführungsform des Unterputz-Installationsgeräts 1 realisierbar, in welcher Unterputz-Geräteeinsatz 13, Bedienteil 16 und Abdeckrahmen 17 eine (einstückige) Einheit bilden.

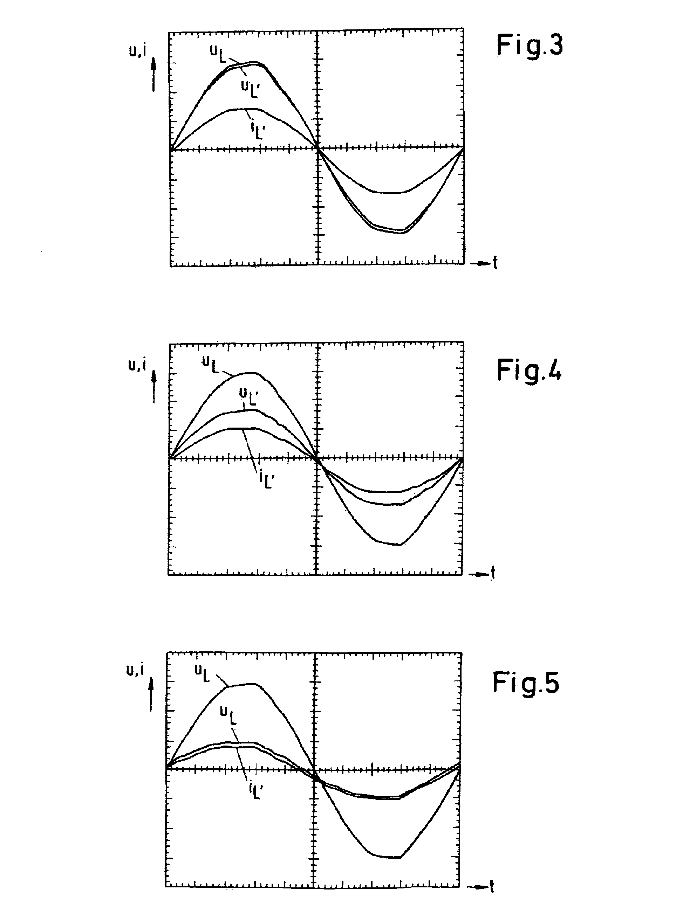

In Fig. 3 - 5 sind interessierende zeitliche Spannungs- und Strom-Verläufe bei unterschiedlicher Ansteuerung des HF-PWM-Generators dargestellt. Es sind jeweils die zeitlichen Verläufe der Netzwechselspannung u_{L}, der Ausgangswechselspannung u_{L'} und des Laststromes i_{L'} dargestellt, wobei t die Zeitachse repräsentiert. Im Einzelnen zeigen
- Fig. 3 die zeitlichen Spannungs- und Strom-Verläufe bei einer 90%-Ansteuerung des HF-PWM-Generators, d. h. die gewünschte (eingestellte) Helligkeit der Beleuchtungsanlage 18 beträgt 90%,
- Fig. 4 die zeitlichen Spannungs- und Strom-Verläufe bei 50%-Ansteuerung des HF-PWM-Generators, d. h. die gewünschte (eingestellte) Helligkeit der Beleuchtungsanlage 18 beträgt 50%,
- Fig. 5 die zeitlichen Spannungs- und Strom-Verläufe bei 20%-Ansteuerung des HF-PWM-Generators, d. h. die gewünschte (eingestellte) Helligkeit der Beleuchtungsanlage 18 beträgt 20%.

Wie auch aus den Figuren 3 - 5 hervorgeht, wird durch das Unterputz-Installationsgerät 1 ein Dimmer respektive ein Helligkeitssteuerungsgerät mit amplitudengesteuerter sinusförmiger Ausgangsspannung - siehe Wechselspannung u_{L'} - bei sinusförmiger Stromentnahme aus dem Wechselspannungsnetz 19 - siehe Laststrom i_{L'} - realisiert. Der HF-PWM-Generator des Unterputz-Installationsgeräts 1 liegt in Reihe zur gesteuerten Beleuchtungsanlage 18. Seine Leistungshalbleiter 6, 7 werden vorzugsweise im Hochfrequenz-Bereich 20.....100kHz in einem Ansteuer-Bereich (Pulsweite) 10.....90% betrieben. Der die Netzwechselspannung taktende HF-PWM-Generator reduziert die Amplitude der Spannung an der Beleuchtungsanlage gegenüber der Netzwechselspannung, ohne dabei die Sinusform der Spannung zu verändern. Über das Puls-/Pausenverhältnis der Hochfrequenz-Taktung wird die Amplitude der Ausgangswechselspannung gesteuert. Die Leistungshalbleiter 6, 7 des HF-PWM-Generators werden über das LC-Filter 3 von der Netzseite getrennt, so dass am Unterputz-Installationsgerät 1 bzw. der Beleuchtungsanlage 18 eine niederfrequente Spannungsteilung entsteht, deren Teilungsverhältnis vom Puls-/Pausenverhältnis der Hochfrequenz-Taktung abhängig ist. Dieses Steuerungsprinzip ist unabhängig von der Art der angeschlossenen Beleuchtungsanlage 18 und vorteilhaft universell für induktive, kapazitive und resistive Beleuchtungsanlagen geeignet.

### Bezugszeichenliste

- 1: elektrisches Unterputz-Installationsgerät mit HF-PWM-Generator als Steuerung zur Einstellung einer gewünschten Helligkeit einer Beleuchtungsanlage (Steuergerät, Dimmer)
- 2: Anschlussklemmenblock
- 3: LC-Filter
- 4: gekoppelte Induktivitäten
- 5: Überspannungs-Schutzelement
- 6: Leistungshalbleiter (Leistungstransistor)
- 7: Leistungshalbleiter (Leistungstransistor)
- 8: Mikrocontroller
- 9: Einstellelement
- 10: Beschaltungswiderstand
- 11: Beschaltungswiderstand
- 12: -
- 13: Unterputz-Geräteeinsatz
- 14: Tragring
- 15: Federspreizen
- 16: Bedienteil mit Einstellelement
- 17: Abdeckrahmen
- 18: Beleuchtungsanlage (LED)
- 19: Wechselspannungsnetz

- i_{L}': Laststrom
- L: Phasenleiter des Wechselspannungsnetzes
- L': Lastleiter, aufbereitete Phase
- N: Nulleiter des Wechselspannungsnetzes
- t: Zeit
- u_{L}: Netzwechselspannung zwischen Phasenleiter L und Nulleiter N
- u_{L'}: Ausgangswechselspannung zwischen Lastleiter L' und Nulleiter N

## Patentansprüche

1. Elektrisches Unterputz-Installationsgerät (1) mit einer Steuerung zur Einstellung einer gewünschten Helligkeit einer Beleuchtungsanlage (18), mit einem einen Tragring (14) aufweisenden Unterputz-Geräteeinsatz (13), einem hierauf aufsteckbarem Bedienteil (16) sowie einem Abdeckrahmen (17), wobei der Unterputz-Geräteeinsatz (13) einen Anschlussklemmenblock (2) zum Anschluss des Phasenleiters (L) eines Wechselspannungsnetzes (19) sowie eines der Beleuchtungsanlage (18) zugeführten Lastleiters (L') aufweist und die Beleuchtungsanlage (18) anderseits mit dem Nulleiter (N) des Wechselspannungsnetzes (19) verbunden ist und wobei das Bedienteil (16) ein Einstellelement (9) zur Vorgabe der gewünschten Helligkeit aufweist, **dadurch gekennzeichnet, dass** die Steuerung in Form eines Hochfrequenz-Pulsweitenmodulation-Generators ausgebildet ist, welcher über ein LC-Filter (3) an den Anschlussklemmenblock (2) angeschlossen ist und von einem Mikrocontroller (8) angesteuert wird, wobei das Einstellelement (9) den Mikrocontroller (8) beaufschlagt und damit das Puls-/Pausenverhältnis der Hochfrequenz-Taktung der Netzwechselspannung einstellt.

2. Unterputz-Installationsgerät (1) nach Anspruch 1, **dadurch gekennzeichnet, dass** der Hochfrequenz-Pulsweitenmodulation-Generator in Form zweier antiseriell geschalteter Leistungshalbleiter (6, 7), insbesondere Leistungstransistoren mit antiparallelen Dioden ausgebildet ist.

3. Unterputz-Installationsgerät (1) nach Anspruch 1, **dadurch gekennzeichnet, dass** der Hochfrequenz-Pulsweitenmodulation-Generator in Form einer Gleichrichterbrücke mit einem am Gleichstromausgang angeschlossenen Leistungstransistor ausgebildet ist.

4. Unterputz-Installationsgerät (1) nach Anspruch 1, **dadurch gekennzeichnet, dass** der Hochfrequenz-Pulsweitenmodulation-Generator über gekoppelte Induktivitäten (4) angeschlossen ist.

5. Unterputz-Installationsgerät (1) nach Anspruch 1, **dadurch gekennzeichnet, dass** der Hochfrequenz-Pulsweitenmodulation-Generator mit einem Überspannungs-Schutzelement (5) beschaltet ist.
